# EUROPÄISCHE PATENTANMELDUNG

(11) **EP 0 556 728 A1**
(43) Veröffentlichungstag der Anmeldung: **25.08.1993**
(21) Anmeldenummer: 93102180.2
(22) Anmeldetag: 11.02.1993
(51) Int. Cl.: B65B 21/18, B65B 65/02

(54) **Vorrichtung zum Zu- oder Abführen von Gefässen**

(30) Priorität: 19.02.1992 DE 4204993
(71) Anmelder: KRONES AG Hermann Kronseder Maschinenfabrik, D-93068 Neutraubling (DE)
(72) Erfinder: Gmeiner, Franz, W-8411 Sinzing-Eilsbrunn (DE)
(74) Vertreter: Grünecker, Kinkeldey, Stockmair & Schwanhäusser Anwaltssozietät

(57) **Zusammenfassung**

Die Erfindung betrifft eine Vorrichtung zum Zu- oder Abführen von Gefäßen mit einem Fördermittel zu oder von einer kontinuierlich arbeitenden Verpackungsmaschine. Zur optimalen Anpassung der Gefäßzu- oder -abfuhr an den Bewegungsablauf der Verpackungsmaschine werden die Gefäße (26) im wesentlichen in geschlossener Formation durch ein mit einer periodisch ungleichförmigen Geschwindigkeit synchron zur Arbeitsleistung der Verpackungsmaschine antreibbares Fördermittel (6) transportiert.

## Beschreibung

Die Erfindung betrifft eine Vorrichtung der im Oberbegriff des Anspruchs 1 angegebenen Art.

Es sind Vorrichtungen bekannt, mit deren Hilfe ein Gefäßpulk kontinuierlich einer Verpackungsmaschine zugeführt wird, wobei dann durch speziell ausgebildete Gruppiereinrichtungen vom vorderen Ende des Pulks Gefäßgruppen abgetrennt, in Förderrichtung beschleunigt und stellungs- und geschwindigkeitssynchron auf die Teilung der nachfolgenden Verpackungsmaschine gebracht werden. Es sind beispielsweise Gruppiereinrichtungen bekannt, die von unten her zwischen die durch Förderbänder zugeführten Gefäße im Pulk eingreifen.

Derartige Gruppiereinrichtungen erfordern einen hohen mechanischen Aufwand, sind störungsanfällig gegen äußere Betriebseinflüsse, z.B. Glasscherben, und müssen bei Formatumstellungen der Verpackungsmaschine entsprechend angepaßt bzw. ausgetauscht werden.

Der Erfindung liegt die Aufgabe zugrunde, eine Vorrichtung der im Oberbegriff des Patentanspruchs 1 angegebenen Art zu schaffen, mit der auf einfache Weise eine Anpassung des Gefäßtransports zu oder von einer Verpackungsmaschine an deren Bewegungsablauf möglich ist.

Die Lösung dieser Aufgabe erfolgt erfindungsgemäß mit den im kennzeichnenden Teil des Anspruchs 1 angegebenen Merkmalen.

Bei der erfindungsgemäßen Vorrichtung erfolgt die Anpassung der Gefäßbewegung durch das zu oder von der Verpackungsmaschine wegführende, die Gefäße transportierende Fördermittel, wobei dieses synchron zur Verpackungsmaschine periodisch ungleichförmig angetrieben wird. Dadurch, daß dieses Fördermittel nicht wie die bekannten Gruppiereinrichtungen formschlüssig an der Außenkontur der zu transportierenden Gefäße angreift, sondern diese vorzugsweise reibschlüssig an ihrer Bodenfläche unterstützt, ist eine Anpassung des Bewegungsablaufes auf äußerst einfache Weise unabhängig von der Kontur oder Größe der Gefäße möglich. Diese Anpassung kann alleine durch eine Veränderung des Fördermittelantriebs herbeigeführt werden.

Der Antrieb des Fördermittels kann durch den Antrieb der Verpackungsmaschine erfolgen, wodurch eine sehr sichere Geschwindigkeits- und Lagesynchronisierung des Fördermittels bezüglich der Verpackungsmaschine sichergestellt ist. Der ungleichförmige Bewegungsablauf des Fördermittels kann durch ein in den Antriebstrang integriertes ungleichförmig übersetzendes Getriebe erzeugt werden.

Anstelle dessen kann das Fördermittel auch unabhängig vom Antrieb der Verpackungsmaschine mit einem eigenen Antrieb ausgestattet sein. Mit Hilfe einer programmierbaren Steuerung ist die Erzeugung der gewünschten ungleichförmigen Bewegung des Fördermittels erreichbar. Auf diese Weise ist eine sehr flexible Anpassung möglich, ohne Veränderungen oder Umbauten an der Verpackungsmaschine oder dem Fördermittel vornehmen zu müssen, indem lediglich das Steuerprogramm und die den ungleichförmigen Bewegungsablauf beeinflussenden Parameter veränderbar sind. Die Geschwindigkeits- und Lagesynchronisierung des Fördermittelantriebs bezüglich der Verpackungsmaschine kann durch an der Verpackungsmaschine angeordnete Stellungs- und Geschwindigkeitssensoren erfolgen.

Im Folgenden werden unter Bezugnahme auf die Zeichnungen zwei Ausführungsbeispiele der Erfindung anhand einer Flascheneinpackmaschine erläutert. Es zeigt:
- Fig. 1: eine Seitenansicht einer Flascheneinpackmaschine,
- Fig. 2: das Antriebschema einer erfindungsgemäßen Vorrichtung mit einem unabhängigen motorischen Antrieb des Flaschenförderbandes,
- Fig. 3: das Antriebschema einer erfindungsgemäßen Vorrichtung nach einem zweiten Ausführungsbeispiel mit einem mechanisch von der Flascheneinpackmaschine abgeleiteten Antrieb des Flaschenförderbandes,
- Fig. 4: den Geschwindigkeitsverlauf des Flaschenförderbandes, den Geschwindigkeitsverlauf der mit den Flaschen zusammenwirkenden Teile der Flascheneinpackmaschine beim Erfassen der Flaschen und den Geschwindigkeitsverlauf der Flaschen während eines Maschinentaktes.

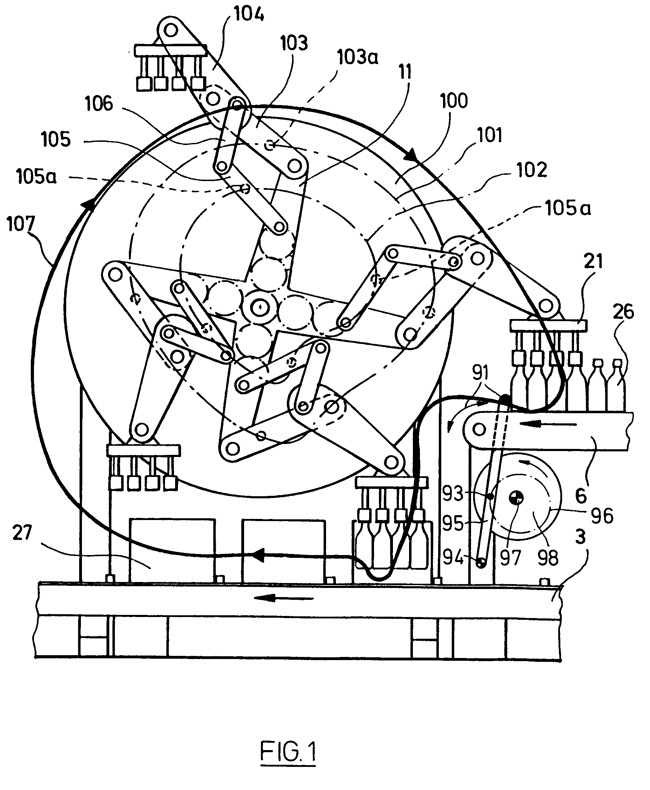

Die in Fig. 1 dargestellte Flascheneinpackmaschine besteht im wesentlichen aus einem kontinuierlich angetriebenen Träger 11, an dem vier Packköpfe 21 jeweils über die Hebel 103 bis 106 angelenkt sind. Parallel zu dem in einer vertikalen Ebene umlaufenden Träger 11 ist eine feststehende Scheibe 100 mit den Steuerkurven 101 und 102 angeordnet, durch die die Hebel 103 und 105 während eines Umlaufes des Trägers 11 mit Hilfe der in die Steuerkurven eingreifenden Kurvenrollen 105a und 103a derart gesteuert werden, daß die Packköpfe 21 die dargestellte Umlaufbahn 107 beschreiben. Die einzupackenden Flaschen 26 werden durch ein horizontales Flaschenförderband 6 in einem geschlossenen Pulk der Flascheneinpackmaschine zugeführt, während die leeren Kästen 27 auf einen Kastenförderer 3 parallel unter dem Flaschenförderband 6 zugeführt werden. Die Flaschen 26 können in mehreren, senkrecht zur Zeichenebene parallel angeordneten Reihen auf dem Flaschenförderband 6 zugeführt werden.

Am Ende des Flaschenförderbandes 6 ist eine an einem Schwenkhebel befestigte, sich quer über die Breite des Flaschenförderbandes 6 erstreckende Anschlagstange 91 befestigt. Der um den ortsfesten Lagerzapfen 94 schwenkbare Schwenkhebel 95 besitzt eine Kurvenrolle 93, die in die Nutkurve 96 einer durch die Flascheneinpackmaschine synchron um die Drehachse 97 angetriebene Kurvenscheibe 98 eingreift. Die Nutkurve 96 ist so gestaltet, daß sich die Anschlagstange 91 zunächst lage- und geschwindigkeitssynchron zu dem sich den vordersten Flaschen 26 des Pulks nähernden Packkopf 21 bewegt, während die Flaschen 26 durch das Flaschenförderband 6 an die Anschlagstange 91 gedrückt werden, so daß der Packkopf 21 die Flaschen 26 zuverlässig am Kopf erfassen kann. Unmittelbar danach wird die Anschlagstange 91 in Förderrichtung beschleunigt, während der Packkopf 21 die erfaßte Flaschengruppe vom Flaschenförderband 6 abhebt. Inzwischen kann die Anschlagstange 91 entgegen der Förderrichtung des Flaschenförderbandes 6 unter der angehobenen Flaschengruppe zurückgeschwenkt und darauffolgend erneut in Förderrichtung des Flaschenförderbandes 6 beschleunigt werden, noch bevor die vorderste Flaschenreihe des nachrückenden Pulks in Anlage mit der Anschlagstange 91 kommt. Durch die in der folgenden Phase etwas höhere Fördergeschwindigkeit des Flaschenförderbandes 6 bezüglich der Anschlagstange 91 kann der Flaschenpulk sanft mit der Anschlagstange 91 in Berührung gebracht werden. Gleichzeitig werden die Flaschen 26 durch die geringfügig höhere Fördergeschwindigkeit des Flaschenförderbandes 6 in Verbindung mit den nicht dargestellten, in Förderrichtung verlaufenden Führungsgeländern untereinander exakt positioniert, bis sie vom nächstfolgenden Packkopf 21 erfaßt werden.

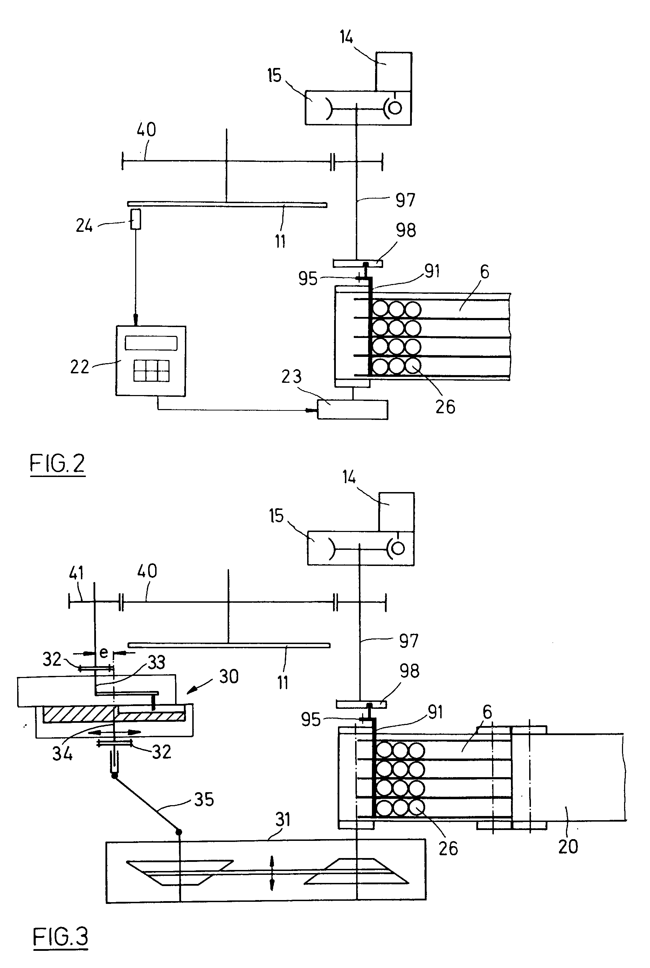

In Fig. 2 ist schematisch das Flaschenförderband 26 in einer Draufsicht mit einem eigenen, vom Antrieb der Flascheneinpackmaschine unabhängigen Antrieb dargestellt. Das Flaschenförderband 6 wird durch einen steuerbaren Motor 23, z.B. Servomotor, angetrieben, der durch eine programmierbare Steuerung 22 gesteuert wird. Die Steuerung 22 kann durch einen am Träger 11 oder dessen Antrieb (Motor 14, Schneckengetriebe 15) angeordneten Drehlagesensor 24 die momentane Arbeitstellung der Einpackmaschine erkennen.

Ferner besitzt die Steuerung 22 einen Speicher für die Steuerprogramme und die vorgebbaren Parameterwerte, die den Verlauf der periodisch ungleichförmigen Geschwindigkeit V_{f} des Flaschenförderbandes 6 beeinflussen, wie z.B. die mittlere Geschwindigkeit, die Phasenverschiebung oder Amplitude.

Der Vorteil einer derartigen Steuerung 22 mit einem Speicher besteht darin, daß alle zu einer bestimmten Flaschen- oder Kastensorte gehörenden Daten abgespeichert und bei einer Umstellung der Einpackmaschine in kürzester Zeit mit wenig Aufwand aufgerufen werden können.

Bei dem in Fig. 3 dargestellten zweiten Ausführungsbeispiel erfolgt der Antrieb des Flaschenförderbandes 6 durch den Antrieb der Flascheneinpackmaschine. Deren Motor 14 treibt über ein Schneckengetriebe 15 das mit dem Träger 11 verdrehfest verbundene Zahnrad 40 an. In dieses Zahnrad 40 greift ein Zahnrad 41 ein, welches über eine einstellbare Kupplung 32 mit der Antriebswelle 33 eines Kurbelschleifengetriebes 30 verbunden ist. Die Antriebswelle 33 treibt einen Kurbelzapfen an, der in eine radial zur Abtriebswelle 34 des Kurbelschleifengetriebes 30 verlaufenden Kulissenführung eingreift. Die mit der Abtriebswelle 34 verdrehfest verbundene Kulissenführung ist stufenlos parallel zur Antriebswelle 32 verstellbar. Die Abtriebswelle 34 ist über eine ebenfalls einstellbare Kupplung 32 und eine Kardanwelle 35 mit integriertem Längenausgleich mit einem stufenlos verstellbaren Kegelscheibengetriebe 31 verbunden. Dieses wiederum treibt das Flaschenförderband 6 an. Durch das Kegelscheibengetriebe 31 kann das Übersetzungsverhältnis zwischen dem Flaschenförderband 6 und dem umlaufenden Träger 11 der Flascheneinpackmaschine stufenlos eingestellt werden. Das eingestellte Übersetzungsverhältnis bestimmt die mittlere Geschwindigkeit Vₘ des Flaschenförderbandes 6.

Durch die ebenfalls stufenlos einstellbare Exzentrizität e zwischen der Antriebswelle 32 und der Abtriebswelle 34 des Kurbelschleifengetriebes 30 kann die Amplitude der sinusförmigen Drehbewegung der Abtriebswelle 34 verändert werden. Die Einstellung der Phasenlage der periodisch ungleichförmigen Geschwindigkeit V_{f} des Flaschenförderbandes 6 bezüglich der Anschlagstange 91 und dem Packkopf 21 der Flascheneinpackmaschine kann durch die lösbaren und stufenlos verstellbaren Kupplungselemente 32 vorgenommen werden.

Daß das ungleichförmig angetriebene Flaschenförderband 6 mit einer vorgeordneten Maschine, z.B. Etikettiermaschine, in einer Verpackungslinie verbindende Förderband 20 kann durch einen eigenen Antrieb (nicht dargestellt) synchron zur mittleren Geschwindigkeit Vₘ des Flaschenförderbandes 6 angetrieben werden.

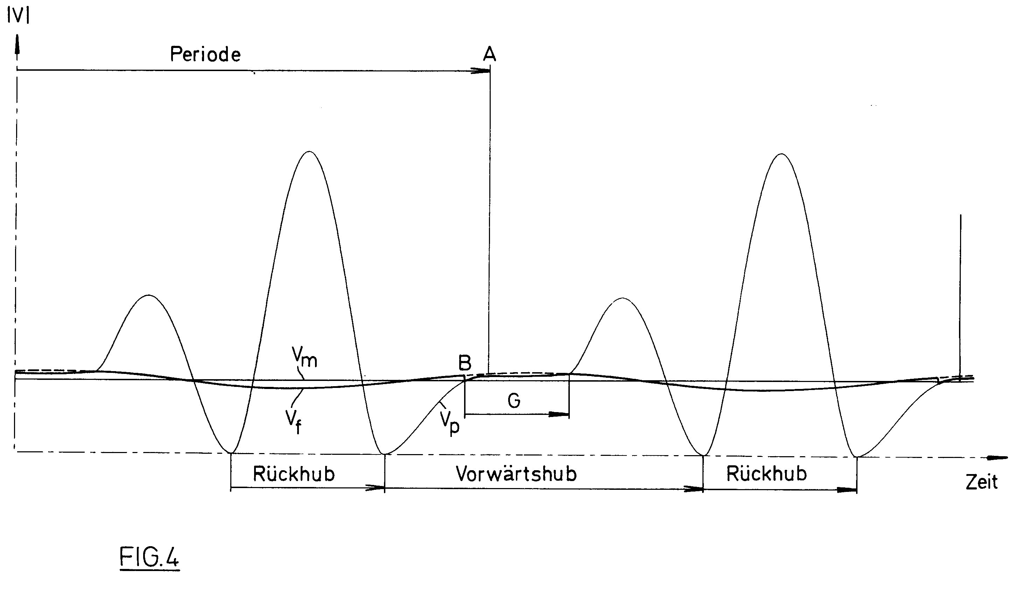

In Fig. 4 sind die Geschwindigkeitsverläufe in zwei aufeinanderfolgenden Arbeitstakten der Flascheneinpackmaschine dargestellt. Mit V_{f} ist die sinusförmige Bandgeschwindigkeit des Flaschenförderbandes 6 und mit Vₘ deren mittlere Geschwindigkeit bezeichnet. Die mit Vₚ bezeichnete Kurve zeigt die Geschwindigkeitsbeträge der oszillierend angetriebenen Anschlagstange 91. Die Geschwindigkeit der Anschlagstange 91 ist beim Erfassen der Flaschen 26 durch den Packkopf 21 gleich, d.h. die Anschlagstange 91 bewegt sich in diesem Bereich geschwindigkeits- und lagesynchron zum Packkopf 21. Die mit A bezeichnete Stelle markiert den Arbeitspunkt, an dem der Packkopf 21 die Flaschen 26 ergreift. Der Punkt B markiert die Betriebsphase, in der die vorderen Flaschen 26 eines nachrückenden Pulks auf die etwas langsamere Anschlagstange 91 auftreffen und durch diese zur Positionierung vor dem Eintreffen des Packkopfes 21 abgebremst werden. Die zunächst mit der Geschwindigkeit V_{f} geförderten Flaschen werden im Punkt B auf die etwas niedrigere Geschwindigkeit Vₚ abgebremst, wobei am Boden der Flaschen etwas Schlupf auftritt. Mit G ist die Gleichlaufphase der Flaschen mit der Anschlagstange 91 bezeichnet. Nach Punkt A werden die durch den synchron laufenden Packkopf 21 erfaßten Flaschen vom Förderband 6 abgehoben worauf die Anschlagstange 91 in Förderrichtung beschleunigt, verzögert und nachfolgend in einem Rückhub entgegen der Förderrichtung zurückgeschwenkt wird. Im Anschluß daran wird die Anschlagstange 91 erneut in Förderrichtung beschleunigt bis der Flaschenpulk die Anschlagstange 91 einholt.

Der sinusförmige Verlauf der Förderbandgeschwindigkeit V_{f} ist so gewählt, daß die verzögerte Geschwindigkeit mit dem Rückhub der Anschlagstange 91 zusammenfällt, wodurch für die Rückwärtsbewegung Zeit gewonnen wird.

## Patentansprüche

1. Vorrichtung zum Zu- oder Abführen von Gefäßen (26) mit einem Fördermittel (6) zu oder von einer kontinuierlich arbeitenden Verpackungsmaschine, dadurch gekennzeichnet, daß die Gefäße (26) im wesentlichen in geschlossener Formation durch ein mit einer periodisch ungleichförmigen Geschwindigkeit (V_{f}) synchron zur Arbeitsleistung der Verpackungsmaschine antreibbares Fördermittel (6) der Verpackungsmaschine zu- oder von dieser abführbar sind.

2. Vorrichtung nach Anspruch 1, dadurch gekennzeichnet, daß der Ungleichförmigkeitsgrad der Geschwindigkeit (V_{f}) des Fördermittels (6) so einstellbar ist, daß während eines Teils (G) einer Periode im wesentlichen Gleichlauf zwischen den mit den Gefäßen (26) zusammenwirkenden Teilen (21, 91) der Verpackungsmaschine und den Gefäßen (26) besteht.

3. Vorrichtung nach einem der vorhergehenden Ansprüche, dadurch gekennzeichnet, daß die Phasenlage zwischen der ungleichförmigen Geschwindigkeit (V_{f}) des Fördermittels (6) und der Geschwindigkeit (Vₚ) der mit den Gefäßen (26) zusammenwirkenden Teile (21, 91) der Verpackungsmaschine einstellbar ist.

4. Vorrichtung nach wenigstens einem der vorhergehenden Ansprüche, dadurch gekennzeichnet, daß die mittlere Geschwindigkeit (Vₘ) der ungleichförmigen Geschwindigkeit (V_{f}) des Fördermittels (6) während einer vollständigen Periode synchron der momentanen Arbeitsleistung einer mit veränderbarer Arbeitsleistung betreibbaren Verpackungsmaschine selbsttätig folgt.

5. Vorrichtung nach wenigstens einem der vorhergehenden Ansprüche, dadurch gekennzeichnet, daß das Verhältnis zwischen der mittleren Geschwindigkeit (Vₘ) des Fördermittels (6) und der momentanen Arbeitsleistung der Verpackungsmaschine einstellbar ist.

6. Vorrichtung nach wenigstens einem der vorhergehenden Ansprüche, dadurch gekennzeichnet, daß die die periodisch ungleichförmige Geschwindigkeit (V_{f}) des Fördermittels (6) beeinflussenden Parameter zur Anpassung an unterschiedliche Formate der Gefäße (26) oder Behälter (27) einstell- und abspeicherbar sind und bei einer Formatumstellung der Verpackungsmaschine aus einem Speicher abrufbar sind.

7. Vorrichtung nach wenigstens einem der vorhergehenden Ansprüche, dadurch gekennzeichnet, daß die die periodisch ungleichförmige Geschwindigkeit (V_{f}) des Fördermittels (6) beeinflussenden Parameter während des Betriebs der Verpackungsmaschine veränderbar sind.

8. Vorrichtung nach wenigstens einem der vorhergehenden Ansprüche, dadurch gekennzeichnet, daß das Fördermittel (6) mittels einer programmierbaren Steuerung (22) unabhängig vom Antrieb der Verpackungsmaschine durch einen eigenen motorischen Antrieb (23) zur Erzeugung der ungleichförmigen Geschwindigkeit (V_{f}) antreibbar ist, wobei die Steuerung (22) durch einen Sensor (24) die Arbeitstellung der Verpackungsmaschine erkennt.

9. Vorrichtung nach Anspruch 8, dadurch gekennzeichnet, daß die Steuerung (22) einen Speicher für die Programme und Parameterwerte (Amplitude, Phasenverschiebung, mittlere Geschwindigkeit) umfaßt.

10. Vorrichtung nach wenigstens einem der vorhergehenden Ansprüche, dadurch gekennzeichnet, daß der Antrieb des Fördermittels (6) durch den Antrieb (2) der Verpackungsmaschine erfolgt, wobei in den Antriebstrang vom Antrieb (2) der Verpackungsmaschine zum Fördermittel (6) jeweils ein ungleichförmig (30) und ein gleichförmig (31) übersetzendes Getriebe, dessen Übersetzungsverhältnis veränderbar ist, integriert sind.

11. Vorrichtung nach Anspruch 10, dadurch gekennzeichnet, daß das Übersetzungsverhältnis des gleichförmig übersetzenden Getriebes (31) stufenlos verstellbar ist.

12. Vorrichtung nach Anspruch 10, dadurch gekennzeichnet, daß die Drehlage des ungleichförmig übersetzenden Getriebes (30) relativ zum Antrieb (2) der Verpackungsmaschine durch ein Klemm- oder Kupplungselement (32) stufenlos verstellbar ist.

13. Vorrichtung nach wenigstens einem der vorhergehenden Ansprüche, dadurch gekennzeichnet, daß das ungleichförmig übersetzende Getriebe (30) als Kurbelschleifengetriebe mit stufenlos verstellbarer Exzentrizität zwischen seiner An- (33) und Abtriebswelle (34) ausgebildet ist.

14. Vorrichtung nach Anspruch 13, dadurch gekennzeichnet, daß dem verstellbaren Teil des Kurbelschleifengetriebes (30) ein einen Achsversatz ausgleichendes Kraftübertragungselement (35) zugeordnet ist.

15. Vorrichtung nach wenigstens einem der vorhergehenden Ansprüche, dadurch gekennzeichnet, daß das ungleichförmig antreibbare Fördermittel (6) als ein horizontal umlaufendes, die Gefäße (26) am Boden tragendes Förderband ausgebildet ist.

16. Vorrichtung nach Anspruch 15, dadurch gekennzeichnet, daß das ungleichförmig antreibbare Förderband (6) am Einlauf einer Verpackungsmaschine, insbesondere einer Maschine zum Einpacken von Gefäßen (26), insbesondere Flaschen, Gläsern oder Dosen, in Behälter (27) wie Kartons oder Kästen angeordnet ist.

17. Vorrichtung nach einem der Ansprüche 15 oder 16, dadurch gekennzeichnet, daß die Verpackungsmaschine einen kontinuierlich umlaufenden Träger (11) mit mindestens einem daran angelenkten, steuerbaren Packkopf (21) aufweist, der eine Gruppe von Gefäßen (26) am vorderen Ende des in einer geschlossenen Formation auf dem Förderband (6) stehenden und durch diesen angeförderten Gefäßpulks erfaßt und in einen Behälter (27) einpackt.

18. Vorrichtung nach wenigstens einem der vorhergehenden Ansprüche, dadurch gekennzeichnet, daß dem ungleichförmig angetriebenen Fördermittel (6) ein gleichförmig antreibbarer Förderer (20) vorgeordnet ist.

19. Vorrichtung nach Anspruch 18, dadurch gekennzeichnet, daß der gleichförmig antreibbare Förderer (20) synchron zur mittleren Geschwindigkeit (Vₘ) des nachfolgenden Fördermittels (6) angetrieben wird, wobei bei übereinstimmender Förderbreite von Fördermittel (6) und Förderer (20) die Geschwindigkeit des Förderers (20) mit der mittleren Geschwindigkeit (Vₘ) übereinstimmt.

20. Vorrichtung nach wenigstens einem der vorhergehenden Ansprüche, dadurch gekennzeichnet, daß die Verpackungsmaschine einen gesteuerten, sich quer über die Breite des Fördermittels (6) erstreckenden Anschlag (91) aufweist, der an das vordere Ende des durch das Fördermittel (6) transportierten Gefäßpulks anlegbar und mit diesem in Förderrichtung steuerbar ist.

21. Vorrichtung nach Anspruch 20, dadurch gekennzeichnet, daß die Geschwindigkeit (V_{f}) des Fördermittels (6) zum Heranführen und Anlegen des Gefäßpulks an den gesteuerten Anschlag (91) zumindest kurzzeitig geringfügig höher ist als die in Förderrichtung weisende Geschwindigkeitskomponente des Anschlags (91).
